# EUROPÄISCHE PATENTSCHRIFT

(11) **EP 4 506 507 B1**
(45) Veröffentlichungstag und Bekanntmachung des Hinweises auf die Patenterteilung: **08.10.2025**
(21) Anmeldenummer: 23190591.0
(22) Anmeldetag: 09.08.2023
(51) Int. Cl.: E02D 7/00, E02D 11/00, E02F 9/02, E02F 9/08, E02F 9/26

(54) **TIEFBAUVORRICHTUNG UND VERFAHREN ZUM BETRIEB EINER TIEFBAUVORRICHTUNG**
EXCAVATION APPARATUS AND METHOD FOR OPERATING AN EXCAVATION APPARATUS
DISPOSITIF DE GÉNIE CIVIL ET PROCÉDÉ DE FONCTIONNEMENT D'UN DISPOSITIF DE GÉNIE CIVIL

(43) Veröffentlichungstag der Anmeldung: 12.02.2025
(73) Patentinhaber: BAUER Maschinen GmbH, 86529 Schrobenhausen (DE)
(72) Erfinder: HÖFLINGER, Alexander, 86529 Schrobenhausen (DE); WEIGL, Alexander, 85304 Ilmmünster (DE); KAHLENBERG, Clemens, 85757 Karlsfeld (DE); KREITMEIER, Jürgen, 86668 Karlshuld (DE)
(74) Vertreter: Wunderlich & Heim Patentanwälte PartG mbB

(56) Entgegenhaltungen:
- EP-A1- 3 722 512
- EP-B1- 2 378 053
- CN-B- 103 663 210
- DE-A1- 102015 003 177
- US-A1- 2022 041 171

## Beschreibung

Die Erfindung betrifft eine Tiefbauvorrichtung mit einem Raupenfahrwerk, welches mindestens ein linkes Raupenfahrschiff und mindestens ein rechtes Raupenfahrschiff aufweist, wobei jedes Raupenfahrschiff eine umlaufend gelagerte Raupenkette aufweist, einem Oberwagen, welcher auf dem Raupenfahrwerk gelagert ist, einer Tiefbaueinheit, welche am Oberwagen angeordnet ist und zum Durchführen eines Tiefbauschrittes ausgebildet ist, und einer Steuereinheit, welche zum Bestimmen einer durch die Raupenfahrschiffe ausgeübten Bodenlast ausgebildet ist, gemäß dem Oberbegriff des Anspruchs 1. Derartige Vorrichtungen sind der Gattung nach z. B. aus der EP 2 378 053 B1 bekannt.

Die Erfindung betrifft weiterhin ein Verfahren zum Betrieb einer solchen Tiefbauvorrichtung gemäß dem Oberbegriff des Anspruchs 10.

Beim Betrieb einer Tiefbauvorrichtung, beispielsweis von Erdbohrgeräten, besteht die grundsätzliche Gefahr eines Umkippens. Aus der EP 2 378 053 B1 ist eine Tiefbaumaschine und ein Verfahren zum Betrieb einer Tiefbaumaschine bekannt, bei welchen über Aufnehmer ein Maschinenzustand sowie einwirkende Kräfte auf die Tiefbaumaschine erfasst werden können, um dem Auftreten eines übermäßigen Kippmomentes auf die Maschine entgegenzuwirken.

Ein Umkippen einer Tiefbauvorrichtung kann jedoch auch durch einen nachgebenden Untergrund verursacht werden. Es ist daher üblich und notwendig, an einer Baustelle für ein Planum zum Betrieb der Tiefbauvorrichtung eine Tragfähigkeit des Bodens zu bestimmen und nötigenfalls durch entsprechende Stabilisierungsmaßnahmen derart festzulegen, dass der Boden einer vorgegebenen Belastung und insbesondere einem durch die Tiefbauvorrichtung bewirkten Bodendruck standhalten kann.

Um eine möglichst gleichmäßige Bodendruckverteilung zu erreichen, sind Tiefbauvorrichtungen typischerweise mit einem Raupenfahrwerk mit Raupenfahrschiffen ausgebildet. Allerdings können sich im Betrieb einer Tiefbauvorrichtung entlang einer Aufstandsfläche der Raupenketten erheblich unterschiedliche Bodendruckbelastungen ergeben.

Aus der gattungsbildenden EP 3 268 538 B1 geht ein Verfahren zur Bodendruckbegrenzung während des Betriebs eines Ramm- und/ oder Bohrgeräts hervor, bei dem eine aktuelle Gerätekonfiguration, etwa eine Mäklerlänge oder eine Ballastierung, über eine Rechnereinheit erfasst werden, wobei die Rechnereinheit hieraus einen theoretischen Bodendruck entlang der Raupenfahrwerke errechnet. Der errechnete Bodendruck wird mit einem maximal zulässigen Bodendruck verglichen. Wird der maximal zulässige Bodendruck überschritten, kann dies zum Abschalten der Tiefbauvorrichtung führen.

Das theoretische Errechnen eines Bodendrucks auf Grundlage einer Gerätekonfiguration ist jedoch mit Unsicherheiten verbunden und ein theoretisch ermittelter Bodendruck kann in nicht unerheblicher Weise von den tatsächlichen Bodendruckverhältnissen abweichen. So können über einen längeren Betrieb einer Tiefbauvorrichtung Änderungen an der Konfiguration der Tiefbauvorrichtung vorgenommen werden, welche durch Eingabefehler oder Störungen von Sensoren in der Rechnereinheit nicht korrekt oder nicht vollständig erfasst sind. Auch können dynamische Einflüsse im Betrieb der Tiefbauvorrichtung oder Witterungseinflüsse, etwa ein Winddruck, erhebliche Auswirkungen auf die Belastung der Maschine und damit auf den Bodendruck haben, was allein durch die Erfassung einer Konfiguration nicht abgedeckt wird. Auch unterschiedliche Bodenbeschaffenheiten können sich auf die Bodendruckverhältnisse auswirken, ohne dass dies allein basierend auf der Gerätekonfiguration erfasst werden könnte.

Weitere Vorrichtungen und Verfahren zum Erfassen oder Bestimmen einer Kippgefahr an einer Tiefbaumaschine sind aus der DE 10 2015 003 177 A1 oder EP 3 722 512 A1 bekannt. Die US 2022/041171 A1 befasst sich mit der Vermeidung einer Überlastung eines Raupenfahrwerkes.

Aus der CN 103 663 210 A ist es bekannt, an den Raupenfahrschiffen eines Raupenfahrwerks einer Baumaschine in einem vorderen und hinteren Bereich des Raupenfahrschiffes jeweils einen Drucksensor anzuordnen, um hiermit einen Bodendruck an den Raupenfahrschiffen bestimmen zu können. Übersteigt der ermittelte Bodendruckwert einen Maximalwert, kann die Maschine durch die Steuerung abgeschaltet werden.

Aus der KR 10 2036 520 B1 geht eine Baumaschine mit Raupenfahrwerk hervor. Entlang der Raupenkette an den Raupenrollen ist eine Vielzahl von Lastsensoren angeordnet. Es können eine Belastung der Rollen und eine Bodenlastverteilung bestimmt und farblich angezeigt werden.

Jedoch kann sich bei einer Druckerfassung mit Drucksensoren am Raupenfahrwerk der Effekt ergeben, dass beim Betrieb einer Tiefbauvorrichtung immer wieder sehr hohe Lastspitzen auftreten und gemessen werden, die zu einer Abschaltung der Maschine führen, ohne dass aber eine tatsächlich kritische Betriebssituation für die Tiefbauvorrichtung gegeben ist. So kann etwa das Überfahren eines vorstehenden Gesteinsbrockens oder einer vorstehenden Bohle mit einem Raupenfahrwerk dazu führen, dass eine solche Drucklastspitze auftritt. Diese Drucklastspitze kann einen vorgegebenen, maximal zulässigen Drucklastwert um ein Vielfaches überschreiten, ohne dass aufgrund der lokalen Begrenzung eine Gefährdung für die Standsicherheit der Tiefbauvorrichtung gegeben wäre. Solche unnötigen Abschaltungen behindern einen effizienten Betrieb einer Tiefbauvorrichtung.

Der Erfindung liegt die **Aufgabe** zugrunde, eine Tiefbauvorrichtung und ein Verfahren zum Betrieb einer Tiefbauvorrichtung anzugeben, mit welchen bei einer hohen Betriebssicherheit ein effizienter Betrieb ermöglicht wird.

Die Aufgabe wird nach der Erfindung zum einen durch eine Tiefbauvorrichtung mit den Merkmalen des Anspruchs 1 und zum anderen mit einem Verfahren mit den Merkmalen des Anspruchs 10 gelöst. Bevorzugte Ausführungsformen der Erfindung sind in den abhängigen Ansprüchen angegeben.

Die erfindungsgemäße Tiefbauvorrichtung ist dadurch gekennzeichnet, dass an jedem Raupenfahrschiff mehrere Lastsensoren angeordnet sind, welche zum Erfassen einer lokalen Last an der Raupenkette über einen Zeitverlauf ausgebildet sind, wobei die erfassten Lastdaten mit einem Zeitstempel versehen werden, und dass die Steuereinheit ausgebildet ist, die erfassten Lastdaten über den Zeitverlauf auszuwerten und einen Bodenlastzustand unter den Raupenfahrschiffen zu ermitteln.

Eine Grundidee der Erfindung liegt darin, mittels einer Vielzahl von Lastsensoren lokale Lasten an der Raupenkette über einen Zeitverlauf zu erfassen und die erfassten Lastdaten über den Zeitverlauf auszuwerten. Dies bedeutet, dass allein eine einmalige, kurzfristige und/oder lokal begrenzte Überschreitung eines vorgegebenen Maximalwertes nicht, jedenfalls nicht sofort oder unmittelbar, zu einer Warnung an die bedienende Person oder zu einer Abschaltung oder Einschränkung des Betriebs der Tiefbauvorrichtung führt. Die Erfindung beruht dabei auf der Erkenntnis, dass in bestimmten Betriebssituationen Lastwertspitzen auftreten können, welche jedoch aufgrund einer zeitlichen und/oder lokalen Begrenzung für die Standsicherheit der Tiefbauvorrichtung nicht maßgeblich, jedenfalls nicht kritisch sind. Die Bodenlast kann auch eine Bodenlastverteilung unter den Raupenfahrschiffen umfassen. Eine ungleichmäßige Bodenlastverteilung kann ein Anzeichen für eine Kippgefahr der Tiefbauvorrichtung sein.

Nach einem weiteren Aspekt der Erfindung werden die erfassten Lastdaten mit einem Zeitstempel versehen, so dass ein eindeutiger zeitlicher Verlauf auch verschiedener Sensordaten erfasst und diese zuverlässig miteinander verglichen werden können. Durch die Steuereinheit kann eine mit der Tiefbauvorrichtung gemeinsame synchronisierte Zeit als eine Maschineneinheitszeit für die Sensoren oder Aufnehmer vorgegeben werden. Hierdurch lässt sich eine besonders zuverlässige Analyse und Auswertung der erfassten Lastdaten und eine entsprechende Prognose zu einem weiteren Verlauf der Lastentwicklung durch die Steuereinheit ermitteln. Die Steuereinheit kann insbesondere mit einem entsprechenden Programm oder Algorithmus zur Auswertung der erfassten Lastdaten über den zeitlichen Verlauf versehen sein.

Eine bevorzugte Ausführungsform der Erfindung besteht darin, dass in der Steuereinheit Grenzwerte für eine zulässige Bodenlast hinterlegt sind und dass die Steuereinheit ausgebildet ist, bei Auftreten von erfassten Lastdaten, welche einen hinterlegten Grenzwert zur zulässigen Bodenlast überschreiten oder unterschreiten, die erfassten Lastdaten über den Zeitverlauf auszuwerten. Die Steuereinheit kann somit feststellen, ob eine zeitlich und/oder lokal begrenzte, zulässige Bodenlastüberschreitung oder Bodenlastunterschreitung oder ein unzulässiger Bodenlastzustand gegeben ist. Ein unzulässiger Bodenlastzustand kann insbesondere eine Bodenlastverteilung unter den Raupenfahrschiffen umfassen. Der Grenzwert kann einen oberen Grenzwert betreffend eine maximal zulässige Bodenlast oder auch einen unteren Grenzwert umfassen. Mit einem unteren Grenzwert kann etwa erfasst werden, wenn die Tiefbauvorrichtung in einen nicht tragfähigen Grund eintritt, beispielsweise in den Bereich eines frischen, noch nicht tragfähigen Bohrpfahl.

Es lässt sich so etwa eindeutig ermitteln, wenn bei einem Fahren der Tiefbauvorrichtung ein größerer Stein oder eine vorstehende Schwelle überfahren wird, wenn an einem ersten Lastsensor am Raupenfahrschiff zu einem ersten Zeitpunkt eine Lastspitze erfasst wird, welche zu einem nachfolgenden zweiten Zeitpunkt wieder abgesunken ist, aber an einem angrenzenden zweiten Lastsensor zu dem zweiten Zeitpunkt das Entstehen einer Lastspitze erfasst wird. Durch ein Auswerteprogramm der Steuereinheit kann durch die eindeutige zeitliche Zuordnung der Lastdaten zu den einzelnen lokal beabstandeten Lastsensoren ermittelt werden, dass trotz einer Überschreitung eines zulässigen Grenzwertes aufgrund des zeitlichen und lokalen Verlaufs der erfassten Lastspitzen keine kritische Betriebssituation gegeben ist, die eine Warnung an die bedienende Person bzw. eine Einschränkung oder Abschaltung des Maschinenbetriebs erfordert.

Wird hingegen von der Steuereinheit durch die eindeutige zeitliche Zuordnung der Lastdaten der einzelnen lokal beabstandeten Lastsensoren ermittelt, dass Lastdaten von mehreren Lastsensoren über eine längere Zeitspanne über oder unter dem zulässigen Grenzwert liegen, kann durch das Auswerteprogramm eine sich anbahnende mögliche kritische Betriebssituation mit einer zu hohen Bodenbelastung erkannt werden. Die Steuereinheit kann dann eine Warnung an die bedienende Person und/oder unmittelbar eine Einschränkung oder Abschaltung des Maschinenbetriebs veranlassen.

Grenzwerte für eine zulässige Bodenlast können über den Maschinenbediener oder per Datenfernübertragung von einer Zentrale vorgegeben werden. Die Grenzwerte können insbesondere aus einem bei größeren Baustellen grundsätzlich vorhandenen Bodengutachten entnommen oder hieraus ermittelt werden. Dies erlaubt eine besonders zuverlässige Analyse zur Standsicherheitssituation einer Tiefbauvorrichtung.

Nach einer Weiterbildung der Erfindung ist es vorteilhaft, dass die Lastsensoren an Laufrollen und/oder Rädern der Raupenfahrschiffe und/oder in einem Verbindungsbereich der Raupenfahrschiffe zu einer Mittelbrücke angeordnet sind. Die Lastsensoren sind vorzugsweise nahe zu dem Kontaktbereich zwischen der Tiefbauvorrichtung und dem Boden, nämlich an den Raupenfahrschiffen, angeordnet. Die Lastsensoren können so Lastdaten erfassen, welche einen besonders guten Rückschluss auf den Bodenlastzustand ermöglichen. Die Laufrollen stellen Auflagerollen entlang der Raupenkette dar. Unter Räder des Raupenfahrwerkes sind im Sinne der Erfindung ein Leitrad oder ein Antriebsrad des Raupenfahrschiffes zu verstehen, welche an den äußeren Umlenkbereichen der Raupenkette angeordnet sind.

Je mehr Lastsensoren verbaut sind, desto besser lässt sich ein tatsächlicher Bodenlastzustand und eine Bodenlastverteilung ermitteln. Grundsätzlich kann etwa an jeder zweiten oder dritten Laufrolle eines Raupenfahrschiffes ein Lastsensor angeordnet sein. Besonders bevorzugt ist es nach einer Ausführungsform der Erfindung, dass an jeder Laufrolle ein Lastsensor angeordnet ist. Dies erlaubt eine besonders genaue Erfassung des Bodenlastzustandes.

Grundsätzlich können die Lastsensoren in jeder geeigneten Weise ausgebildet sein, etwa als Kraftmessdosen, Kraftmessstreifen oder Drucksensoren. Besonders vorteilhaft ist es nach einer Variante der Erfindung, dass die Lastsensoren als Lastmessbolzen ausgebildet sind, an welchen jeweils eine Laufrolle und/oder ein Rad der Raupenfahrschiffe gelagert ist. Dies ermöglicht eine kompakte Anordnung der Lastsensoren bei exakter Erfassung von Lastdaten.

Gemäß einer Weiterbildung der Erfindung ist es bevorzugt, dass mindestens ein weiterer Sensor zum Erfassen eines Betriebszustandes der Tiefbauvorrichtung über einen Zeitverlauf angeordnet ist, insbesondere zum Erfassen einer Drehstellung des Oberwagens, einer Neigung des Oberwagens, einer Neigung und/oder Position des Mastes und/oder einer Beschleunigung oder einer Geschwindigkeit einer Komponente der Tiefbauvorrichtung, wobei die erfassten Betriebsdaten mit einem Zeitstempel versehen werden. Weitere Sensoren können auch zum Erfassen von Kräften, etwa Zugkräften an Seilwinden, an Stellzylindern oder von sonstigen Betriebszuständen ausgebildet sein. Weiterhin können Sensoren zum Erfassen von von außen einwirkenden Kräften angeordnet sein, insbesondere zur Erfassung eines Winddrucks.

Die von den Sensoren erfassten Daten können mit einem Zeitstempel entsprechend einer Maschineneinheitszeit versehen werden, so dass die Daten von der Steuereinheit und insbesondere einem entsprechenden Auswerteprogramm zeitlich exakt den erfassten Lastdaten der Lastsensoren zur Auswertung zugeordnet werden können.

Generell können die einzelnen Sensoren über einen geeigneten Datenbus oder Feldbus miteinander zur Datenübermittelung verbunden sein. Eine besonders vorteilhafte Ausführung der Erfindung besteht darin, dass die Lastsensoren und/ oder mindestens ein weiterer Sensor über ein CAN-Bus-System mit der Steuereinheit verbunden sind. Dies ermöglicht eine besonders effiziente Datenübertragung und Datenaustausch.

Für einen sicheren Betrieb einer Tiefbauvorrichtung ist es nach einer Ausführungsvariante der Erfindung vorteilhaft, dass vor oder bei Erreichen eines unzulässigen Bodenlastzustandes ein Warnsignal ausgebbar ist und/ oder ein Betrieb der Tiefbauvorrichtung eingeschränkt oder gestoppt wird. Durch die Auswertung eines zeitlichen Verlaufs der Lastdaten kann von der Steuereinheit mit dem Auswerteprogramm eine Prognose zum erwarteten Lastverlauf getroffen werden, so dass frühzeitig ein Warnsignal an einen Bediener ausgegeben werden kann oder unmittelbar der Betrieb der Tiefbauvorrichtung eingeschränkt, geändert oder gestoppt wird.

Insbesondere ist es nach einer Ausführungsform der Erfindung vorteilhaft, dass die Steuereinheit ausgebildet ist, auf Grundlage der über einen Zeitverlauf erfassten Lastdaten eine Gefahr eines möglichen Grundbruchs und/ oder eines Umkippens zu ermitteln und insbesondere eine Warnung hiervor auszugeben. Insbesondere können ein oder mehrere Bewegungs- und/ oder Neigungssensoren angeordnet sein, welche ebenfalls mit der Steuereinheit in Verbindung stehen. Wird neben einer hohen Bodenlast auch ein Neigen der Tiefbauvorrichtung oder ein sonstiges Bewegen aufgrund einer möglichen Bodenveränderung festgestellt, kann frühzeitig eine Gefahrenwarnung, eine Einschränkung, ein Verzögern oder ein Abschalten von Komponentenbewegungen oder der Tiefbauvorrichtung insgesamt erfolgen.

Das erfindungsgemäße Verfahren zum Betrieb einer erfindungsgemäßen Tiefbauvorrichtung ist dadurch gekennzeichnet, dass an jedem Raupenfahrschiff über die mehreren Lastsensoren eine lokale Last an der Raupenkette über einen Zeitverlauf erfasst wird, wobei die erfassten Lastdaten mit einem Zeitstempel versehen werden, und dass die Steuereinheit die erfassten Lastdaten über den Zeitverlauf auswertet und einen Bodenlastzustand unter den Raupenfahrschiffen ermittelt. Die Last kann eine Kraft, ein Druck und/ oder eine mechanische Spannung sein und als solche erfasst werden. Unter einem Bodenlastzustand können einzelne Bodenlastwerte, insbesondere ein auf den Boden wirkender Druck, oder eine hieraus ermittelte Bodenlastverteilung, insbesondere eine Bodendruckverteilung verstanden werden. Die Bodenlast beziehungsweise die Bodenlastverteilung können sich insbesondere auf die Aufstandsfläche der Tiefbauvorrichtung beziehen, insbesondere die Kontaktfläche von einem oder beiden Raupenfahrschiffen zum Boden.

Das erfindungsgemäße Verfahren kann mit der zuvor beschriebenen erfindungsgemäßen Tiefbauvorrichtung durchgeführt werden. Es können hierbei die zuvor beschriebenen Vorteile erzielt werden. Die erfindungsgemäße Tiefbauvorrichtung kann auch bevorzugt mit dem erfindungsgemäßen Verfahren betrieben werden.

Eine bevorzugte Verfahrensvariante besteht nach der Erfindung darin, dass in der Steuereinheit Grenzwerte für eine zulässige Bodenlast hinterlegt werden und dass beim Auftreten von erfassten Lastdaten, welche einen hinterlegten Grenzwert zur zulässigen Bodenlast überschreiten, die erfassten Lastdaten über den Zeitverlauf von der Steuereinheit ausgewertet werden, ob eine zeitlich und/oder lokal begrenzte, zulässige Bodenlastüberschreitung oder Bodenlastunterschreitung oder ein unzulässiger Bodenlastzustand gegeben ist. Hierdurch kann frühzeitig eine Bodenüberlastung und eine Gefahr eines Grundbruchs und/ oder eine stark ungleichmäßige Bodenlastverteilung unter den Raupenfahrschiffen und damit eine Gefahr eines Umkippens der Tiefbauvorrichtung erkannt werden.

Nach einer Weiterbildung des erfindungsgemäßen Verfahrens ist es bevorzugt, dass über mindestens einen weiteren Sensor weitere Daten zu einem Betriebszustand der Tiefbauvorrichtung über den zeitlichen Verlauf erfasst und an die Steuereinheit zur Auswertung weitergeleitet werden. So kann eine Beurteilung der Bodenlast erfolgen und damit der Gefahr einer Bodenlastüberschreitung zuverlässig entgegengewirkt werden.

Die Tiefbauvorrichtung kann insbesondere ein Erdbohrgerät, eine Schlitzwandfräse, ein Seilbagger, ein Greiferbagger, ein Rüttlergerät oder ein Rammgerät zum Eintreiben von Pfählen und Bohlen in den Boden sein. Die jeweilige Tiefbauvorrichtung kann einen Mast, an welchem eine entsprechende Bodenbearbeitungseinheit, also ein Bohrantrieb, eine Fräse, eine Ramme oder ein Rüttler, entlang des im Wesentlichen vertikalen Mastes verstellbar gelagert sind, oder einen verstellbaren Ausleger aufweisen.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine Ausführungsform einer erfindungsgemäßen Tiefbauvorrichtung;
- Fig. 2: eine vergrößerte Detail-Seitenansicht zu einem Raupenfahrschiff zu einer erfindungsgemäßen Tiefbauvorrichtung; und
- Fig. 3: eine Detail-Perspektivansicht von innen zu dem Raupenfahrschiff von Fig. 2.

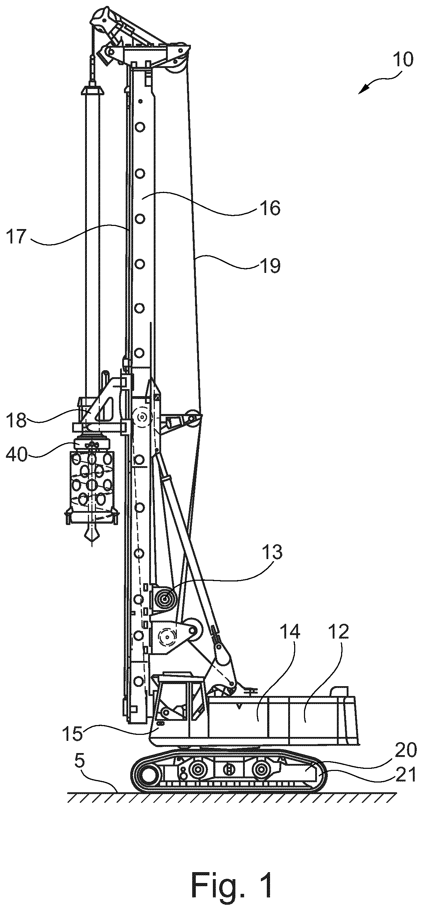

Eine Ausführungsform einer erfindungsgemäßen Tiefbauvorrichtung 10 ist in Fig. 1 dargestellt, welche beispielhaft als ein Bohrgerät ausgebildet ist. Die Tiefbauvorrichtung 10 weist beispielsweise ein Trägergerät 12 mit einem Oberwagen 14 auf, welcher drehbar auf einem als Raupenfahrwerk 20 ausgebildeten Unterwagen gelagert sein kann. Das Raupenfahrwerk 20 weist zwei Raupenfahrschiffe 21, 22 auf, welche parallel zueinander angeordnet sind. In Fig. 1 ist nur das linke Raupenfahrschiff 21 erkennbar. Über die Raupenfahrschiffe steht die Tiefbauvorrichtung 10 auf einem Boden 5 auf.

Ein Mast 16 kann an dem Oberwagen 14 schwenkbar gelagert sein. Entlang einer Mastachse können Führungsschienen 17 ausgebildet sein, entlang welchen ein Schlitten 18 mit der Tiefbaueinheit 40 verschiebbar gelagert sein kann. In dem dargestellten Ausführungsbeispiel ist die Tiefbaueinheit 40 beispielhaft als ein Bohrantrieb mit einem rotierend angetriebenen Bohrwerkzeug ausgebildet. Es kann auch eine andere Ausbildung der Tiefbaueinheit 40 vorgesehen sein, etwa als eine Schlitzwandfräse, eine Ramme oder ein Rüttler. Der Schlitten 18 kann mittels einer Seilwinde 13 über ein Seil 19 und/oder durch mindestens einen Vorschubzylinder entlang des Mastes 16 verfahren werden.

Zur Durchführung des erfindungsgemäßen Verfahrens kann an dem Oberwagen 14 in einer Fahrerkabine 15 eine Steuereinheit angeordnet sein, mit welcher die Tiefbaueinheit 40 sowie weitere Komponenten der Tiefbauvorrichtung 10 gesteuert werden können. Weiterhin ist die Steuereinheit mit mehreren Lastsensoren 30 am Raupenfahrwerk 20 sowie gegebenenfalls weiteren Sensoren und Aufnehmern verbunden.

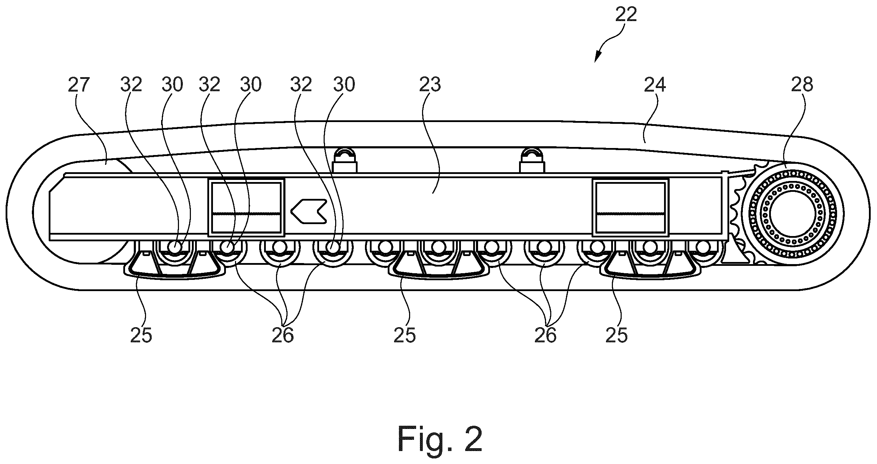

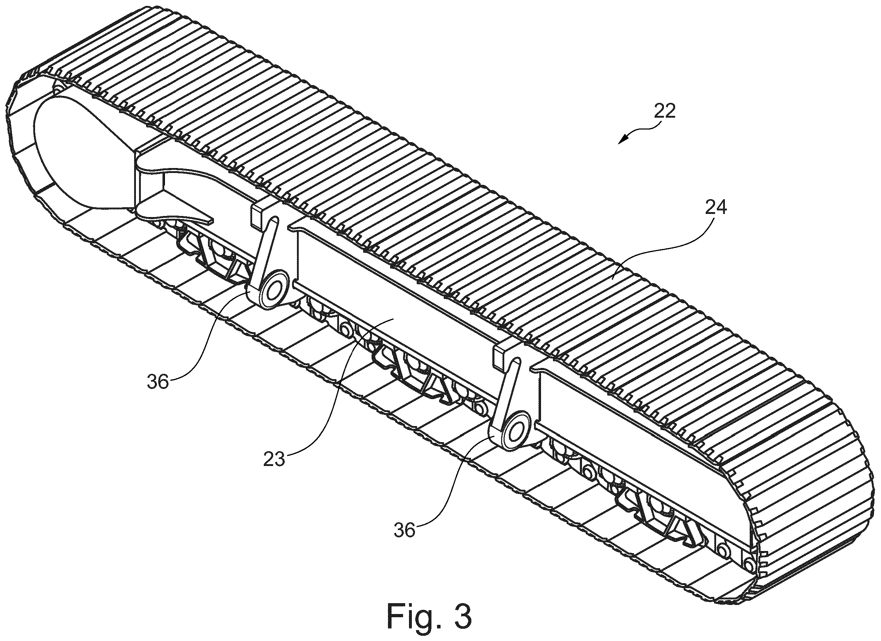

Eine mögliche Ausführung eines rechten Raupenfahrschiffes 22 für die erfindungsgemäße Tiefbauvorrichtung 10 ist in den Figuren 2 und 3 verdeutlicht. Ein linkes Raupenfahrschiff 21 kann spiegelsymmetrisch dazu aufgebaut sein. An einem balkenartigen Mittenträger 23 eines Raupenfahrschiffes 22 ist eine Vielzahl von Laufrollen 26, insbesondere entlang der Unterseite des Mittenträgers 23, angeordnet. An den beiden Enden des Mittenträgers 23 sind Umlenkräder gelagert, um welche eine Raupenkette 24, auch Gleiskette genannt, umläuft. Ein Umlenkrad kann ein passives Leitrad 27 und das andere Umlenkrad ein Antriebsrad 28 sein, welches drehend angetrieben sein kann, um die Raupenkette 24 und damit die Tiefbauvorrichtung 10 insgesamt in Bewegung zu versetzen. Zur Führung der Raupenkette 24 können ein oder mehrere Kettenführungen 25 an dem Mittenträger 23 angeordnet sein. An einem oder beiden Umlenkrädern eines Raupenfahrschiffes 21, 22 können Lastsensoren angeordnet sein.

Bei der dargestellten Ausführungsform sind insgesamt 11 untere Laufrollen 26 an dem Raupenfahrschiff 22 angeordnet. Diese sind jeweils drehbar an einem Lastmessbolzen 32 gelagert, welcher jeweils als Lastsensor 30 ausgebildet ist. Mit dem Lastsensor 30 können vorzugsweise die Kräfte erfasst werden, welche zwischen der jeweiligen Laufrolle 26 und der angrenzenden Raupenkette 24 wirken. Es können somit bei der dargestellten Ausführungsform über die beispielhaft 11 Laufrollen 26 zeitgleich 11 Lastdaten erfasst und zu der Steuereinheit übermittelt werden. In der Steuereinheit können aus den so erfassten Lastdaten, welche jeweils durch die Lastsensoren 30 mit einem Zeitstempel versehen werden, vorzugsweise mit einer Maschineneinheitszeit, eine Bodenlast und insbesondere einer Bodenlastverteilung an der Aufstandsfläche der Tiefbauvorrichtung 10 auf den Boden 5 ermittelt werden. In der Steuereinheit kann insbesondere mittels eines entsprechenden Auswerteprogramms ermittelt werden, ob eine Bodenlastüberschreitung und/oder die Gefahr eines Kippens aufgrund einer stark ungleichmäßigen Bodenlastverteilung über die Aufstandsfläche der beiden Raupenfahrschiffe 22 besteht. Es können auch andere Anzahlen von Laufrollen 26 und Lastsensoren 30 angeordnet sein.

Alternativ oder ergänzend können Lastsensoren 30 auch an einem oder mehreren Verbindungsbereichen 36 des Mittenträgers 23 des Raupenfahrschiffes 22 zu einer Mittelbrücke des Raupenfahrwerkes 20 angeordnet sein. Auch hieraus lässt sich eine Bodenlast und insbesondere eine Bodenlastverteilung ermitteln.

## Patentansprüche

1. Tiefbauvorrichtung mit
- einem Raupenfahrwerk (20), welches mindestens ein linkes Raupenfahrschiff (21) und mindestens ein rechtes Raupenfahrschiff (22) aufweist, wobei jedes Raupenfahrschiff (21, 22) eine umlaufend gelagerte Raupenkette (24) aufweist,
- einem Oberwagen (14), welcher auf dem Raupenfahrwerk (20) gelagert ist,
- einer Tiefbaueinheit (40), welche am Oberwagen (14) angeordnet ist und zum Durchführen eines Tiefbauschrittes ausgebildet ist und
- einer Steuereinheit, welche zum Bestimmen einer durch die Raupenfahrschiffe (21, 22) ausgeübten Bodenlast ausgebildet ist,
**dadurch gekennzeichnet,**
- **dass** an jedem Raupenfahrschiff (21, 22) mehrere Lastsensoren (30) angeordnet sind, welche zum Erfassen einer lokalen Last an der Raupenkette (24) über einen Zeitverlauf ausgebildet sind, wobei die erfassten Lastdaten mit einem Zeitstempel versehen werden, und
- **dass** die Steuereinheit ausgebildet ist, die erfassten Lastdaten über den Zeitverlauf auszuwerten und einen Bodenlastzustand unter den Raupenfahrschiffen (21, 22) zu ermitteln.

2. Tiefbauvorrichtung nach Anspruch 1,
**dadurch gekennzeichnet,**
- **dass** in der Steuereinheit Grenzwerte für eine zulässige Bodenlast hinterlegt sind und
- **dass** die Steuereinheit ausgebildet ist, bei Auftreten von erfassten Lastdaten, welche einen hinterlegten Grenzwert zur zulässigen Bodenlast überschreiten oder unterschreiten, die erfassten Lastdaten über den Zeitverlauf auszuwerten, ob eine zeitlich und/oder lokal begrenzte, zulässige Bodenlastüberschreitung oder Bodenlastunterschreitung oder ein unzulässiger Bodenlastzustand gegeben ist.

3. Tiefbauvorrichtung nach Anspruch 1 oder 2,
**dadurch gekennzeichnet,**
**dass** die Lastsensoren (30) an Laufrollen (26) und/oder Rädern (27, 28) der Raupenfahrschiffe (21, 22) und/oder in einem Verbindungsbereich (36) der Raupenfahrschiffe (21, 22) zu einer Mittelbrücke angeordnet sind.

4. Tiefbauvorrichtung nach Anspruch 3,
**dadurch gekennzeichnet,**
**dass** an jeder Laufrolle (26) ein Lastsensor (30) angeordnet ist.

5. Tiefbauvorrichtung nach einem der Ansprüche 1 bis 4,
**dadurch gekennzeichnet,**
**dass** die Lastsensoren (30) als Lastmessbolzen (32) ausgebildet sind, an welchen jeweils eine Laufrolle (26) und/oder ein Rad (27, 28) der Raupenfahrschiffe (21, 22) gelagert ist.

6. Tiefbauvorrichtung nach einem der Ansprüche 1 bis 5,
**dadurch gekennzeichnet,**
**dass** mindestens ein weiterer Sensor zum Erfassen eines Betriebszustandes der Tiefbauvorrichtung (10) über einen Zeitverlauf angeordnet ist, insbesondere zum Erfassen einer Drehstellung des Oberwagens (14), einer Neigung des Oberwagens (14), einer Neigung und Position eines Mastes (16) und/oder einer Beschleunigung oder einer Geschwindigkeit einer Komponente der Tiefbauvorrichtung (10), wobei die erfassten Betriebsdaten mit einem Zeitstempel versehen werden.

7. Tiefbauvorrichtung nach einem der Ansprüche 1 bis 6,
**dadurch gekennzeichnet,**
**dass** die Lastsensoren (30) und/oder der mindestens eine weitere Sensor über ein CAN-Bus-System mit der Steuereinheit verbunden sind.

8. Tiefbauvorrichtung nach einem der Ansprüche 2 bis 7,
**dadurch gekennzeichnet,**
**dass** vor oder bei Erreichen eines unzulässigen Bodenlastzustandes ein Warnsignal ausgebbar ist und/oder ein Betrieb der Tiefbauvorrichtung (10) eingeschränkt oder gestoppt wird.

9. Tiefbauvorrichtung nach einem der Ansprüche 1 bis 8,
**dadurch gekennzeichnet,**
**dass** die Steuereinheit ausgebildet ist, auf Grundlage der über einen Zeitverlauf erfassten Lastdaten eine Gefahr eines möglichen Grundbruchs und/oder eines Umkippens zu ermitteln und insbesondere eine Warnung hierzu auszugeben.

10. Verfahren zum Betrieb einer Tiefbauvorrichtung (10) nach einem der Ansprüche 1 bis 9,
**dadurch gekennzeichnet,**
- **dass** an jedem Raupenfahrschiff (21, 22) über die mehreren Lastsensoren (30) eine lokale Last an der Raupenkette (24) über einen Zeitverlauf erfasst wird, wobei die erfassten Lastdaten mit einem Zeitstempel versehen werden, und
- **dass** die Steuereinheit die erfassten Lastdaten über den Zeitverlauf auswertet und einen Bodenlastzustand unter den Raupenfahrschiffen (22) ermittelt.

11. Verfahren nach Anspruch 10,
**dadurch gekennzeichnet,**
**dass** in der Steuereinheit Grenzwerte für eine zulässige Bodenlast hinterlegt werden und
**dass** bei Auftreten von erfassten Lastdaten, welche einen hinterlegten Grenzwert zur zulässigen Bodenlast überschreiten oder unterschreiten, die erfassten Lastdaten über den Zeitverlauf von der Steuereinheit ausgewertet werden, ob eine zeitlich und/oder lokal begrenzte, zulässige Bodenlastüberschreitung oder Bodenlastunterschreitung oder ein unzulässiger Bodenlastzustand gegeben ist.

12. Verfahren nach Anspruch 10 oder 11,
**dadurch gekennzeichnet,**
**dass** über mindestens einen weiteren Sensor weitere Daten zu einem Betriebszustand der Tiefbauvorrichtung (10) über den Zeitverlauf erfasst und an die Steuereinheit zur Auswertung weitergeleitet werden.

## Claims

1. Civil-engineering device comprising
- a tracked chassis (20), which comprises at least one left-hand crawler assembly (21) and at least one right-hand crawler assembly (22), wherein each crawler assembly (21, 22) comprises a crawler track (24) which is mounted in a circulating manner,
- a superstructure (14), which is mounted on the tracked chassis (20),
- a civil-engineering unit (40), which is arranged on the superstructure (14) and is designed for carrying out a civil-engineering step, and
- a control unit, which is designed to determine a ground load exerted by the crawler assemblies (21, 22),
**characterised in that**
- a plurality of load sensors (30) are arranged on each crawler assembly (21, 22) and are designed to detect a local load on the crawler track (24) over a period of time, wherein the detected load data are provided with a time stamp, and
- **in that** the control unit is designed to evaluate the detected load data over the period of time and to ascertain a ground load state under the crawler assemblies (21, 22).

2. Civil-engineering device according to claim 1,
**characterised in that**
- limit values for a permissible ground load are stored in the control unit, and
- **in that**, when detected load data arise which exceed or fall below a stored limit value for the permissible ground load, the control unit is designed to evaluate the detected load data over the period of time as to whether the data has exceeded or fallen below the ground load in a temporally and/or locally limited, permissible manner or whether there is an impermissible ground load state.

3. Civil-engineering device according to claim 1 or 2,
**characterised in that**
the load sensors (30) are arranged on track rollers (26) and/or wheels (27, 28) of the crawler assemblies (21, 22) and/or in a connection region (36) of the crawler assemblies (21, 22) to a middle bridge.

4. Civil-engineering device according to claim 3,
**characterised in that**
a load sensor (30) is arranged on each track roller (26).

5. Civil-engineering device according to any of claims 1 to 4,
**characterised in that**
the load sensors (30) are designed as load measurement pins (32), on each of which a track roller (26) and/or a wheel (27, 28) of the crawler assemblies (21, 22) is mounted.

6. Civil-engineering device according to any of claims 1 to 5,
**characterised in that**
at least one further sensor for detecting an operating state of the civil-engineering device (10) over a period of time is arranged, in particular for detecting a rotational position of the superstructure (14), an inclination of the superstructure (14), an inclination and position of a mast (16) and/or an acceleration or speed of a component of the civil-engineering device (10), wherein the detected operating data are provided with a time stamp.

7. Civil-engineering device according to any of claims 1 to 6,
**characterised in that**
the load sensors (30) and/or the at least one further sensor are connected to the control unit via a CAN bus system.

8. Civil-engineering device according to any of claims 2 to 7,
**characterised in that**
a warning signal can be output and/or operation of the civil-engineering device (10) can be limited or stopped before or when an impermissible ground load state is reached.

9. Civil-engineering device according to any of claims 1 to 8,
**characterised in that**
the control unit is designed to identify a risk of a possible ground failure and/or of the device toppling over on the basis of the load data detected over a period of time and, in particular to output a warning in this regard.

10. Method for operating a civil-engineering device (10) according to any of claims 1 to 9,
**characterised in that**
- a local load on the crawler track (24) is detected over a period of time on each crawler assembly (21, 22) by means of the plurality of load sensors (30), wherein the detected load data are provided with a time stamp, and
- **in that** the control unit evaluates the detected load data over the period of time and ascertains a ground load state under the crawler assemblies (22).

11. Method according to claim 10,
**characterised in that**
limit values for a permissible ground load are stored in the control unit, and
**in that**, when detected load data arise which exceed or fall below a stored limit value for the permissible ground load, the detected load data are evaluated over the period of time by the control unit as to whether the data has exceeded or fallen below the ground load in a temporally and/or locally limited, permissible manner or whether there is an impermissible ground load state.

12. Method according to claim 10 or 11,
**characterised in that**
further data relating to an operating state of the civil-engineering device (10) are detected over the period of time by means of at least one further sensor and are relayed to the control unit for evaluation.

## Revendications

1. Dispositif de génie civil avec
- un châssis à chenilles (20), qui présente au moins un module de chenille gauche (21) et au moins un module de chenille droit (22), chaque module de chenille (21, 22) présentant une chenille (24) montée en rotation,
- un chariot supérieur (14), qui est monté sur le châssis à chenilles (20),
- une unité de génie civil (40) qui est agencée sur le chariot supérieur (14) et qui est réalisée pour exécuter une étape de génie civil et
- une unité de commande qui est réalisée pour déterminer une charge au sol exercée par les modules de chenille (21, 22),
**caractérisé en ce que**
- plusieurs capteurs de charge (30) sont agencés sur chaque module de chenille (21, 22), lesquels sont réalisés pour détecter une charge locale sur la chenille (24) sur une période de temps, les données de charge détectées étant munies d'un horodateur, et
- **en ce que** l'unité de commande est réalisée pour évaluer les données de charge détectées sur la période de temps et pour déterminer un état de charge au sol sous les modules de chenille (21, 22).

2. Dispositif de génie civil selon la revendication 1,
**caractérisé en ce que**
- des valeurs limites pour une charge au sol admissible sont enregistrées dans l'unité de commande et
- **en ce que** l'unité de commande est réalisée, en cas d'apparition de données de charge détectées qui dépassent ou sont inférieures à une valeur limite enregistrée pour la charge au sol admissible, pour évaluer les données de charge détectées sur la période de temps pour déterminer s'il y a un dépassement de la charge au sol ou un sous-dépassement de la charge au sol admissible, limité dans le temps et/ou localement, ou un état de charge au sol inadmissible.

3. Dispositif de génie civil selon la revendication 1 ou 2,
**caractérisé en ce que**
les capteurs de charge (30) sont agencés sur des galets de roulement (26) et/ou des roues (27, 28) des modules de chenille (21, 22) et/ou dans une zone de liaison (36) des modules de chenille (21, 22) à un pont central.

4. Dispositif de génie civil selon la revendication 3,
**caractérisé en ce qu'**
un capteur de charge (30) est agencé sur chaque galet de roulement (26).

5. Dispositif de génie civil selon l'une quelconque des revendications 1 à 4, **caractérisé en ce que**
les capteurs de charge (30) sont réalisés sous forme de boulons de mesure de charge (32) sur lesquels sont montés respectivement un galet de roulement (26) et/ou une roue (27, 28) des modules de chenille (21, 22).

6. Dispositif de génie civil selon l'une quelconque des revendications 1 à 5, **caractérisé en ce qu'**
au moins un autre capteur est agencé pour détecter un état de fonctionnement du dispositif de génie civil (10) sur une période de temps, notamment pour détecter une position de rotation du chariot supérieur (14), une inclinaison du chariot supérieur (14), une inclinaison et une position d'un mât (16) et/ou une accélération ou une vitesse d'un composant du dispositif de génie civil (10), les données de fonctionnement détectées étant munies d'un horodateur.

7. Dispositif de génie civil selon l'une quelconque des revendications 1 à 6, **caractérisé en ce que**
les capteurs de charge (30) et/ou l'au moins un autre capteur sont reliés à l'unité de commande par un système de bus CAN.

8. Dispositif de génie civil selon l'une quelconque des revendications 2 à 7, **caractérisé en ce qu'**
avant ou lorsqu'un état de charge au sol inadmissible est atteint, un signal d'avertissement peut être émis et/ou un fonctionnement du dispositif de génie civil (10) est limité ou stoppé.

9. Dispositif de génie civil selon l'une quelconque des revendications 1 à 8, **caractérisé en ce que**
l'unité de commande est réalisée pour déterminer, sur la base des données de charge détectées sur une période de temps, un risque d'une rupture du sol possible et/ou d'un basculement et pour émettre notamment un avertissement à ce sujet.

10. Procédé d'exploitation d'un dispositif de génie civil (10) selon l'une quelconque des revendications 1 à 9,
**caractérisé en ce que**,
- sur chaque module de chenille (21, 22), une charge locale sur la chenille (24) est détectée sur une période de temps par l'intermédiaire des plusieurs capteurs de charge (30), les données de charge détectées étant munies d'un horodateur, et
- **en ce que** l'unité de commande évalue les données de charge détectées sur la période de temps et détermine un état de charge au sol sous les modules de chenille (22).

11. Procédé selon la revendication 10,
**caractérisé en ce que**
des valeurs limites pour une charge au sol admissible sont enregistrées dans l'unité de commande et
**en ce qu'**en cas d'apparition de données de charge détectées qui dépassent ou sont inférieures à une valeur limite enregistrée pour la charge au sol admissible, les données de charge détectées sont évaluées par l'unité de commande sur la période de temps pour déterminer s'il y a un dépassement de la charge au sol ou un sous-dépassement de la charge au sol admissible, limité dans le temps et/ou localement, ou un état de charge au sol inadmissible.

12. Procédé selon la revendication 10 ou 11,
**caractérisé en ce que**
d'autres données relatives à un état de fonctionnement du dispositif de génie civil (10) sont détectées sur la période de temps par l'intermédiaire d'au moins un autre capteur et sont transmises à l'unité de commande pour évaluation.
